Europäisches Patentamt

European Patent Office

Office européen des brevets

(19)

(11) Publication number: **0 398 738**
**A1**

## (12) EUROPEAN PATENT APPLICATION

(21) Application number: **90305382.5**

(22) Date of filing: **18.05.90**

(51) Int. Cl.⁵: **C08F 6/00, C08C 3/00**

(30) Priority: **18.05.89 US 353425**

(43) Date of publication of application:
**22.11.90 Bulletin 90/47**

(84) Designated Contracting States:
**BE DE FR GB GR IT NL**

(71) Applicant: **NALCO CHEMICAL COMPANY**
**One Nalco Center**
**Naperville Illinois 60563-1198(US)**

(72) Inventor: **Syrinek, Allen R.**
**Route 2, Box 31/VA**
**Richmond, Texas 77469(US)**

(74) Representative: **Harrison, David Christopher**
**et al**
**MEWBURN ELLIS 2 Cursitor Street**
**London EC4A 1BQ(GB)**

(54) **Dewatering agents for polymer slurries.**

(57) The present invention is a method for dewatering a wet, particulate polymer mass. The method of the present invention includes several steps, one of which is adding a surface active macromolecule to a wet, particulate polymer mass. The polymer mass is thereafter subjected to a mechanical dewatering procedure. Typically, these mechanical dewatering procedures include filtration, centrifugation, coagulation, and thermal drying. The surface active macromolecules of the present invention have been useful in reducing the moisture content of various wet, particulate polymer masses. The surface active macromolecules of the present invention alter the water function characteristics of the wet, particulate polymer mass, and thereby facilitate the dewatering of the polymer mass. The compounds of the present invention are effective at low concentrations of from about 7.5 to 300 ppm.

EP 0 398 738 A1

## DEWATERING AGENTS FOR POLYMER SLURRIES

Water is commonly employed by polymer manufacturers as the medium in which polymerization occurs. For example, high molecular weight polymers of vinyl chloride are prepared by suspension polymerization in water, and copolymers of butadiene, acrylonitrile and/or styrene are prepared by emulsion polymerization also in water. After polymerization is completed the polymers precipitate as small aggregates of polymer fibers, known as crumb. Typically, these crumbs are from a few hundred to several thousand microns in diameter, and onto their surface is adsorbed water.

In the past water was partially removed from the surface of the polymer crumb by various mechanical dewatering procedures or combinations of procedures including coagulation, filtration, centrifugation, and thermal (oven) drying. Typically, the wet, particulate polymer mass comprised of polymer crumb would be centrifuged. This would result in a partial dewatering. The partially dewatered polymer mass would most likely thereafter be subjected to thermal drying until a target moisture level was reached.

Due to the increased demand for polyvinyl chloride, polyethylene, and other rubber and plastic polymers, polymer manufacturers have attempted to increase production. However, because of the water function characteristics of the various polymers, e.g. surface tension, electrical potential, adhesional and cohesional forces, and the like, the dewatering process has become a bottleneck, restricting the efficient production of plastic and rubber polymers. Presently, the dewatering process is inefficient, time consuming, and costly. In an attempt to overcome these problems, manufacturers have unsuccessfully attempted to manipulate the mechanical dewatering processes presently available. For example, polymer manufacturers have increased the heat used in the thermal drying process in order to reduce the time for dewatering. However, the increased heat resulted in discolored and damaged product. Moreover, with energy costs increasing rapidly, increasing the heat of thermal drying is not a cost-effective means for reducing the time for a dewatering. Thus, polymer manufactures presently have no cost-effective way to increase the efficiency of the dewatering process.

The present invention helps to alleviate several of the problems associated with the dewatering process. Surface-active compositions when added to a wet, particulate polymer mass alter the water function characteristics of the polymer mass and effect a chemical dewatering of the polymer mass. This chemical dewatering procedure when used in association with presently available mechanical dewatering procedures reduces the time and heat required for thermal drying, while increasing the efficiency of the overall dewatering process by reducing the amount of water retained in the finished product. Thus, a polymer manufacturer utilizing the compositions of the present invention can produce a higher quality product in less time and for a lower cost than in the past.

The present invention is a method for dewatering a wet, particulate polymer mass. The method of the present invention includes several steps, one of which is adding a surface active macromolecule to a wet, particulate polymer mass. The polymer mass is thereafter subjected to a mechanical dewatering procedure. Typically, these mechanical dewatering procedures include filtration, centrifugation, coagulation, and thermal drying.

The surface active macromolecules of the present invention are useful in reducing the moisture content of various wet, particulate polymer masses. The surface active macromolecules of the present invention alter the water function characteristics of the wet, particulate polymer mass, and thereby facilitate the dewatering of the polymer mass. The compounds used in the present invention are effective at low concentrations of from about 7.5 to about 300 ppm, and will usually have mw's in the range 300-250,000.

It is therefore a general object of the present invention to provide a composition for altering the water function characteristics of a wet, particulate polymer mass.

It is further object of the present invention to provide a composition which, when used in association with a known mechanical dewatering procedure, will result in a more efficient dewatering of a wet, particulate polymer mass.

Compositions are formulated for altering the water function characteristics of a wet, particulate polymer mass. This result is achieved by combining a surface active macromolecule with a wet, particulate polymer mass prior to subjecting the wet, particulate polymer mass to a mechanical dewatering process. The surface active macromolecules are surface active molecules having a molecular weight of from about 300 to about 200,000.

It is speculated that the surface active macromolecules of the present invention function by altering the water function characteristics of a wet, particulate polymer mass, by reducing surface tension at the surface of the polymer crumb. This enhances the capillary flow of water through the solid bed of the polymer mass, and thus effects a dewatering. This theory is meant to aid in undertaking the present invention and may not be complete. The surface active macromolecules are useful alone or in combination.

One class of surface active macromolecules useful in the practice of the present invention are the fatty acid diesters of polyethylene glycol. Preferably, the fatty acids contain from sixteen to twenty carbon atoms. Most preferred, however, are the long-chain unsaturated fatty acids containing 18 carbon atoms. We have discovered that the long-chain unsaturated fatty acids oleic, linoleic, and linolenic acid diesters of polyethylene glycol provide a surface active macromolecule having excellent dewatering characteristics. The material of commerce which is known as tall oil fatty acid, being predominantly a mixture of oleic and linoleic acids, is one suitable source of long-chain unsaturated fatty acids, particularly because of its low cost. Also, commercial grades of stearic, palmitic, and oleic acid are suitable sources of fatty acids.

The polyethylene glycol utilized in the synthesis of the surface active macromolecules most preferably has a molecule weight of about 400. For purposes of this invention polyethylene glycol 400 is the equivalent of any polyethylene glycol having a molecular weight of about 400. However, polyethylene glycol 600, 800 and 1000 molecular weight may also be utilized in the present invention. According to a preferred embodiment of the invention, the tall oil fatty acid (mostly oleic acid) diesters of polyethylene glycol 400 are the preferred surface active macromolecules. However, the most preferred surface active macromolecule of this class is polyethylene glycol 400 dioleate, the oleic acid diester of polyethylene glycol 400, manufactured commercially by C.P. Hall Company. For purposes of this invention polyethylene glycol 400 dioleate is the equivalent of the dioleate of any polyethylene glycol having a molecular weight of about 400.

According to one preferred embodiment, the method of the present invention is practiced using polyethylene glycol 400 dioleate as the surface active macromolecule. Accordingly, to this preferred embodiment, the polymer mass is first suspended in water, creating a slurry. This slurry is then treated with a surface active macromolecule, preferably, polyethylene glycol 400 dioleate. As 2% solution, polyethylene glycol 400 dioleate is added to the slurry. The final concentration of polyethylene glycol 400 dioleate in the slurry is from about 10 to 300 ppm and more preferably from about 50 to 100 ppm. The treated slurry is then placed into a basket centrifuge, preferably, having a 210 micron screen and is centrifuged at 1000 rpm, preferably for three minutes. The treated wet, particulate polymer mass is removed from the centrifuge and weighed. The treated polymer mass is then dried at 210 °F (about 99 °C) until a constant weight is obtained. This procedure is repeated using an untreated wet, particulate polymer mass as a control. The difference between the amount of water retained in the untreated polymer mass and the treated mass is then calculated as a percentage. The above procedure is repeated three times in order to calculate the average dewatering effect.

We have determined from several studies that polyethylene glycol 400 dioleate is an effective dewatering aid. In one study, conducted according to the preferred embodiment set forth above, the wet, particulate polymer mass was a polyvinyl chloride, polyvinyl chloride Batch A. In this study polyethylene glycol 400 dioleate was added to a slurry of polyvinyl chloride Batch A and water in concentrations of from 50 to 300 ppm. The percent reduction of water retained by the treated polyvinyl chloride Batch A was from 3.4 to 17.7. However, the concentration of 75 ppm was found to be most effective, reducing the percentage of water retained by the treated polyvinyl chloride Batch A 17.7 percent.

In another study, the wet, particulate polymer mass was a polyvinyl chloride, polyvinyl chloride Batch B. Polyethylene glycol 400 dioleate was added to a slurry of polyvinyl chloride Batch B and water in concentrations of from 25 to 75 ppm. The percent reduction of water retained by the treated polyvinyl chloride Batch B was from 5.3 to 11.7. However, a concentration of 50 ppm was most effective, reducing the water retained by the treated polyvinyl chloride Batch B 11.7 percent.

In yet another study, a copolymer of butadiene/acrylonitrile was utilized as the wet, particulate polymer mass. Polyethylene glycol 400 dioleate was added to a slurry of butadiene/acrylonitrile copolymer and water in concentrations of from 10 to 50 ppm. The percent reduction of water retained by the treated butadiene/acrylonitrile copolymer was reduced from 1.7 to 5.7. However, it was determined that a concentration of 10 ppm was most effective, reducing the percentage of water retained by the treated butadiene/acrylonitrile copolymer 5.7 percent.

In a further study, a copolymer of butadiene, acrylonitrile, and styrene, was utilized as the wet, particulate polymer mass. Polyethylene glycol 400 dioleate was added to a slurry of butadiene, acrylonitrile, and styrene copolymer and water in concentrations of from 10 to 50 ppm. The percent reduction of water retained by the treated butadiene, acrylonitrile and styrene copolymer was from 1.7 to 2.6. However, the concentration of 25 ppm was most effective, reducing the water retained by the treated butadiene, acrylonitrile, and styrene copolymer 2.6 percent.

Another class of surface active macromolecules useful in the present invention are the cationic surface active macromolecules.

According to one preferred embodiment, the surface active macromolecules used in the present

3

invention are obtained by reacting a mixture of 11-15 carbon chain length alcohols with 1.5 moles of epichlorohydrin which is then quaternized with trimethylamine. This produces the mixture 3-alkoxy($C_{11}$-$C_{15}$)-2-hydroxy-n-propyl trimethylammonium chloride. It has been determined that this mixture is an effective dewatering agent.

According to one embodiment, the method of the present invention is preferably practiced using the mixture 3-alkoxy($C_{12}$-$C_{15}$)-2-hydroxy-n-propyl trimethylammonium chloride as the surface active macromolecule. According to this embodiment, a polymer mass is suspended in water creating a slurry. This mixture is then treated with a surface active macromolecule, preferably, 3-alkoxy($C_{11}$-$C_{15}$)-2-hydroxy-n-propyl trimethylammonium chloride. As a 1% solution, 3-alkoxy($C_{11}$-$C_{15}$)-2-hydroxy-n-propyl trimethylammonium chloride is added to the slurry. The final concentration of 3-alkoxy($C_{11}$-$C_{15}$)-2-hydroxy-n-propyl trimethylammonium chloride in the slurry is from about 12 to about 50 ppm. The treated slurry is then placed into a basket centrifuge, preferably, having a 210 micron screen and is centrifuged at 1000 rpm, preferably for three minutes. The treated wet, particulate polymer mass is removed from the centrifuge and is weighed. The polymer mass is then dried at 210 F° (about 99°C) until a constant weight is obtained. This procedure is repeated using an untreated wet, particulate polymer mass as a control. The difference in the water retained in the untreated polymer mass and the treated mass is then calculated as a percentage.

It has been determined through experimentation that the mixture 3-alkoxy($C_{11}$-$C_{15}$)-2-hydroxy-n-propyl trimethylammonium chloride is an effective dewatering agent. In one study, conducted according to the preferred embodiment set forth above, the wet, particulate polymer mass was a polyvinyl chloride, polyvinyl chloride Batch A. In this study 3-alkoxy($C_{11}$-$C_{15}$)-2-hydroxy-n-propyl trimethylammonium chloride was added to the slurry of polyvinyl chloride Batch A and water in concentrations of from 12 to 100 ppm. The percent reduction of water retained by the treated polyvinyl chloride Batch A was from 3.4 to 17.7. However, the concentration of 38 ppm was found to be most effective, reducing the water retained by the treated polyvinyl chloride Batch A 17.7 percent.

In another study, the wet, particulate polymer mass was a polyvinyl chloride, polyvinyl chloride Batch B. In this study, 3-alkoxy($C_{11}$-$C_{15}$)-2-hydroxy-n-propyl trimethylammonium chloride was added to the slurry of polyvinyl chloride Batch B in concentrations of from 25 to 50 ppm. In this study the percent reduction of water retained in the treated polyvinyl chloride Batch B was from 5.3 to 11.7. However, the concentration 25 ppm was most effective, reducing the water retained in the treated polyvinyl chloride Batch B 11.7 percent.

In yet another study, a copolymer of butadiene/acrylonitrile was utilized as the wet, particulate polymer mass. 3-alkoxy($C_{11}$-$C_{15}$)-2-hydroxy-n-propyl trimethylammonium chloride was added to the slurry of butadiene/acrylonitrile copolymer and water concentrations of from 12 to 25 ppm. The percent reduction of water retained in the treated butadiene/acrylonitrile copolymer was 2.9 to 5.7. However, the concentration of 25 ppm was found to be the most effective, reducing the water retained by the treated butadiene/acrylonitrile copolymer 5.7 percent.

A further class of surface active macromolecules useful in the practice of the present invention are surface active polymers. Agents included in this group are the surface active polymers consisting of large homopolymers or copolymers of approximately 20,000-200,000 molecular weight.

The most preferred surface active polymers of the present invention are the homopolymers of diallyl dimethyl ammonium chloride (POLYDADMAC). Preferably, POLYDADMAC has a molecular weight of about 150,000. According to a preferred embodiment, POLYDADMAC, having a molecular weight of 150,000 is utilized as the surface active macromolecule in the practice of the inventive method. According to this embodiment a particular polymer mass is first suspended in water, creating a slurry. This mixture is then treated with a surface active macromolecule, preferably, POLYDADMAC. As a 0.3% solution, POLYDADMAC is added to the slurry. The final concentration of POLYDADMAC in the slurry is from about 7.5 to 75 ppm. The treated slurry is then placed into a basket centrifuge, preferably, having a 210 micron screen and is centrifuged at 1000 rpm, preferably for three minutes. The wet, particulate polymer mass is then removed from the centrifuge and is weighed. The polymer mass is then dried at 210° F (about 99°C) until a constant weight is obtained. This procedure is repeated using an untreated wet, particulate polymer mass as a control. The difference in the water retained in the untreated polymer mass and the treated mass is then calculated as a percentage.

It has been determined by experimentation that POLYDADMAC having a molecular weight of about 150,000 is an effective dewatering agent. In one study, conducted according to the preferred embodiment set forth above, the wet, particular polymer mass was a polyvinyl chloride, polyvinyl chloride Batch A. In this study, POLYDADMAC was added to the slurry of polyvinyl chloride Batch A and water in concentrations of from 45 to 75 ppm. The percent reduction of water retained in the treated polyvinyl chloride Batch A was from 8.4 to 15.7. However, the concentration of 75 ppm was found to be most effective, reducing of water retained in the treated polyvinyl chloride Batch A 15.7 percent.

4

In another study, the wet, particulate polymer mass was a polyvinyl chloride, polyvinyl chloride Batch B. POLYDADMAC was added to the slurry of polyvinyl chloride Batch B and water in concentrations of from 15 to 75 ppm. In this study the percent reduction of water retained in the treated polyvinyl chloride Batch B was reduced from 1.3 to 3.5. However, a concentration 15 ppm was most effective, reducing the water retained in the treated polyvinyl chloride Batch B 3.5 percent.

In yet another study a copolymer of butadiene/acrylonitrile was utilized as the wet, particulate polymer mass. POLYDADMAC was added to the slurry of butadiene/acrylonitrile and water in concentrations of from 7.5 to 75 ppm. The percent reduction of water retained in the treated polymer mass was from 0.4 to 2.9. However, it was determined that the concentration of 7.5 ppm was most effective, reducing the water retained in the treated butadiene/acrylonitrile copolymer 2.9 percent.

In a further study, a copolymer of butadiene, acrylonitrile, and styrene, was utilized as the wet, particulate polymer mass. POLYDADMAC was added to the slurry of butadiene, acrylonitrile, and styrene copolymer in concentrations of from 45 to 75 ppm. The percent of water retained in the treated butadiene, acrylonitrile, and styrene copolymer was reduced 2.9 percent at the concentration of 75 ppm.

The compositions are useful dewatering agents alone or in combination when added to a wet, particulate polymer mass at levels of from about 7.5 to about 300 ppm. Furthermore, the instant compositions are advantageously utilized in conjunction with a mechanical dewatering procedure such as filtration, coagulation, centrifugation, thermal drying or the like in order to promote and accelerate the dewatering action of the mechanical dewatering procedure. For purposes of describing the invention more fully, the following working examples are given, without however, limiting the invention to the precise details and conditions set forth.

## EXAMPLES

### General Dewatering Test Method For Examples 1-6

A basket centrifuge was used to remove water from the polymer crumb. Efficiency of removal was made by comparison of residual water in the crumb of treated and untreated samples. Comparisons were made only to a control with no dewatering additive.

A wet, particulate polymer mass was mixed with water and agitated to suspend the solids, creating a slurry. Samples of polyvinyl chloride Batch A, B and C, a copolymer of butadiene with acrylonitrile, and a copolymer of butadiene with acrylonitrile and with styrene were utilized in separate trials as the wet, particulate polymer mass. To two hundred milliliters of the polymer slurry was added the dewatering agent (the surface active macromolecule) and the contents were stirred for several minutes to ensure mixing. The dewatering agent was added as a dilute solution. The final concentration of the dewatering agent in the slurry is from 7.5 to 300 ppm. The dewatering agents utilized in these trials were polyethylene glycol 400 dioleate, 3-alkoxy($C_{11}$-$C_{15}$)-2-hydroxy-n-propyl trimethylammonium chloride and POLYDADMAC having a molecular weight of about 150,000. The treated slurry was placed into the 5-inch diameter basket of a basket centrifuge having a 210 micron screen. The centrifuge was set at approximately 1000 RPM and the contents were centrifuged for three minutes. The contents were removed from the basket and weighed. The polymer mass was then dried at 210°F until a constant weight was obtained. The percent of water remaining in the polymer mass prior to drying was then calculated by dividing the difference between the wet weight and dry weight by the wet weight. This procedure was run again with an untreated wet, particulate polymer mass as a control. The percent of water remaining in the treated polymer mass was substracted from the percent of water remaining in the untreated polymer mass (control). This difference was divided by the percent of water remaining in the control to obtain the percent reduction of water retained in the treated polymer mass. This procedure was run three times for each trial in order to calculate the average dewatering effect.

### EXAMPLE 1

### Dewatering of Polyvinyl Chloride Batch A

In Example 1, four trials are conducted. In each trial a different surface active macromolecule or combination of surface active macromolecules was used as the drying agent. The general dewatering test method set forth above was followed in each trial with the following exceptions:

(1) For all the trials of Example 1, the wet, particulate polymer mass was polyvinyl chloride Batch A;

(2) In trial 1, POLYDADMAC was added to the slurry in concentrations of 45 and 75 ppm;

(3) In trial 2, polyethylene glycol 400 dioleate was added to the slurry in concentrations of 50, 75, 100, and 300 ppm;

(4) In trial 3, the mixture 3-alkoxy($C_{11}$-$C_{15}$)-2-hydroxy-n-propyl trimethylammonium chloride was added to the slurry in concentrations of 12, 25, 50 and 100 ppm;

(5) In trial 4, POLYDADMAC and polyethylene glycol 400 dioleate were added to the slurry in concentrations of 45 and 50 ppm respectively.

The results of trials 1-4 of Example 1 are summarized in Table I below.

Table I

| DEWATERING DATA FOR PVC BATCH A | | | | |
|---|---|---|---|---|
| TRIAL | CHEMICAL | DOSAGE | % WATER IN CAKE | %REDUCTION |
| | BLANK | 0 | 35.6 | |
| 1 | A | 45 | 32.6 | 8.4 |
| | | 75 | 30.0 | 15.7 |
| 2 | B | 50 | 34.4 | 3.4 |
| | | 75 | 29.3 | 17.7 |
| | | 100 | 31.0 | 12.9 |
| | | 300 | 34.6 | 2.8 |
| 3 | C | 12 | 30.7 | 13.8 |
| | | 25 | 28.9 | 18.8 |
| | | 50 | 26.8 | 24.7 |
| | | 100 | 27.4 | 23.0 |
| 4 | A&B | 45 + 50 | 28.1 | 21.1 |
| A = POLYDADMAC | | | | |
| B = POLYETHYLENE GLYCOL 400 DIOLEATE | | | | |
| C = 3-alkoxy($C_{11}$-$C_{15}$)-2-hydroxy-n-propyl trimethylammonium chloride | | | | |

EXAMPLE 2

Dewatering Of Polyvinyl Chloride Batch B

In Example 2, four trials were conducted. In each trial a different surface active macromolecule or combination of surface active macromolecules were used as the dewatering agent. The general dewatering test method set forth above was followed in each trial with the following exceptions:

(1) For all the trials of Example 2, the wet, particulate polymer mass was polyvinyl chloride Batch B.

(2) In trial 2, POLYDADMAC was added to the slurry in concentrations of 15, 45 and 75 ppm;

(3) In trial 2, polyethylene glycol 400 dioleate was added to the slurry in concentrations of 25, 50 and 75 ppm;

(4) In trial 3, a mixture 3-alkoxy($C_{11}$-$C_{15}$)-2-hydroxy-n-propyl trimethylammonium chloride was added to the slurry in concentrations of 25 and 50 ppm.;

(5) In trial 5, POLYDADMAC and polyethylene glycol 400 dioleate were added to the slurry in concentrations of 15 and 25 ppm respectively.

6

The results of trials 1-4 of Example 2 are summarized in Table II below.

TABLE II

| DEWATERING DATA FOR POLYVINYL CHLORIDE BATCH B | | | | |
|---|---|---|---|---|
| TRIAL | CHEMICAL | DOSAGE | % WATER IN CAKE | %REDUCTION |
|  | BLANK | 0 | 37.5 |  |
| 1 | A | 15 | 36.3 | 3.5 |
|  |  | 45 | 36.5 | 2.7 |
|  |  | 75 | 37.0 | 1.3 |
| 2 | B | 25 | 35.5 | 5.3 |
|  |  | 50 | 33.1 | 11.7 |
|  |  | 75 | 38.6 | ** |
| 3 | C | 25 | 40.5 | ** |
|  |  | 50 | 36.8 | 1.9 |
| 4 | A&B | 15 + 25 | 34.8 | 7.2 |

A = POLYDADMAC
B = POLYETHYLENE GLYCOL 400 DIOLEATE
C = 3-alkoxy($C_{11}$-$C_{15}$)-2-hydroxy-n-propyl trimethylammonium chloride

**Increase in the percentage of water

EXAMPLE 3

Dewatering Of Copolymer Butadiene/Acrylonitrile

In Example 3, three trials were conducted. In each trial a different surface active macromolecule was used as the dewatering agent. The general dewatering test method set forth above was followed.in each trial with the following exceptions:

(1) For all the trials of Example 3, the wet, particulate polymer mass was a copolymer of butadiene/acrylonitrile;

(2) In trial 1, POLYDADMAC was added to the slurry in concentrations of 7.5 and 75 ppm;

(3) In trial 2, polyethylene glycol 400 dioleate was added to the slurry in concentrations of 10, 25, and 50 ppm;

(4) In trial 3, the mixture 3-alkoxy($C_{11}$-$C_{15}$)-2-hydroxy-n-propyl trimethylammonium chloride was added to the slurry in concentrations of 12 and 25.

The results of trials 1-3 of Example 3 are summarized in Table III below.

## TABLE III

| DEWATERING DATA FOR BUTADIENE/ACRYLONITRILE | | | | |
|---|---|---|---|---|
| TRIAL | CHEMICAL | DOSAGE | % WATER IN CAKE | %REDUCTION |
| | BLANK | 0 | 47.6 | |
| 1 | A | 75 | 47.4 | 0.4 |
| | | 7.5 | 46.2 | 2.9 |
| 2 | B | 50 | 46.4 | 2.5 |
| | | 25 | 46.2 | 2.9 |
| | | 10 | 44.9 | 5.7 |
| 3 | C | 25 | 48.7 | ** |
| | | 12 | 46.2 | 2.9 |
| A = POLYDADMAC B = POLYETHYLENE GLYCOL 400 DIOLEATE C = 3-alkoxy($C_1$-$C_{15}$)-2-hydroxy-n-propyl trimethylammonium chloride | | | | |

**Increase in the percentage of water

## EXAMPLE 4

Dewatering Of A Copolymer Of Butadiene With Acrylonitrile And With Styrene

In Example 4, three trials were conducted. In each trial a different surface active macromolecule or combination of surface active macromolecules were used as the dewatering agent. The general dewatering test method set forth above was followed in each trial with the following exceptions:

(1) For all the trials of Example 4, the wet, particulate polymer mass was a copolymer of butadiene with acrylonitrile and with styrene.

(2) In trial 1, POLYDADMAC was added to the slurry in concentrations of 45 and 75 ppm;

(3) In trial 2, polyethylene glycol 400 dioleate was added to the slurry in concentrations of 25, 50, 75 and 100 ppm;

(4) In trial 3, POLYDADMAC and polyethylene glycol 400 dioleate were added to the slurry in concentrations of 75 and 50 ppm. respectively.

The results of trials 1-3 of Example 4 are summarized in Table IV below.

## TABLE IV

| DEWATERING DATA FOR A COPOLYMER OF BUTADIENE WITH ACRYLONITRILE AND WITH STYRENE | | | | |
|---|---|---|---|---|
| TRIAL | CHEMICAL | DOSAGE | % WATER IN CAKE | %REDUCTION |
|  | BLANK | 0 | 41.3 |  |
| 1 | A | 45 | 41.9 | ** |
|  |  | 75 | 40.1 | 2.9 |
| 2 | B | 25 | 40.4 | 2.2 |
|  |  | 50 | 40.2 | 2.4 |
|  |  | 75 | 41.5 | ** |
|  |  | 100 | 40.4 | 2.2 |
| 3 | A&B | 75 + 50 | 40.8 | 1.2 |
| A = POLYDADMAC <br> B = POLYETHYLENE GLYCOL 400 DIOLEATE <br> C = 3-alkoxy($C_{11}$-$C_{15}$)-2-hydroxy-n-propyl trimethylammonium chloride | | | | |

**Increase in the percentage of water

## EXAMPLE 5

Dewatering Of Polyvinyl Chloride Batch C

In Example 5, one trial was conducted. In this trial the surface active macromolecule polyethylene glycol 400 dioleate was used as the dewatering agent. The general dewatering test method set forth above was followed in each trial with the following exceptions:

(1) For Example 5, the wet, particulate polymer mass was polyvinyl chloride Batch C.

(2) In Example 5, polyethylene glycol 400 dioleate was added to the slurry in concentrations of 50, 75 and 100 ppm. The results of example 5 are summarized in Table V below.

## TABLE V

| DEWATERING DATA FOR PVC SLURRY BATCH C | | | | |
|---|---|---|---|---|
| TRIAL | CHEMICAL | DOSAGE | % WATER IN CAKE | %REDUCTION |
|  | BLANK | 0 | 30.9 |  |
| 1 | B | 50 | 27.7 | 10.3 |
|  |  | 75 | 25.4 | 17.8 |
|  |  | 100 | 26.5 | 14.4 |
| B = POLYETHYLENE GLYCOL 400 DIOLEATE | | | | |

**Claims**

9

1. The method of dewatering a wet, particulate polymer mass which comprises the steps of: adding a surface active macromolecule to a wet, particulate polymer mass in an amount sufficient to aid in the dewatering of said polymer mass; and subjecting said polymer mass thereafter to a mechanical dewatering procedure.

2. A method according to claim 1 wherein the surface active macromolecule is or are (a) fatty acid diester(s) of polyethylene glycol.

3. The method according to claim 2 wherein the fatty acid contains from about 16 to about 20 carbon atoms.

4. The method according to claim 3 wherein the fatty acid contains 18 carbon atoms.

5. The method according to any one of the preceding claims wherein the polyethylene glycol has a molecular weight of about 400 to 1000.

6. The method according to claim 5 wherein the macromolecule is polyethylene glycol 400 dioleate.

7. The method according to claim 2 wherein said fatty acid is a mixture of two or more of oleic, linoleic, linolenic, and abietic acids.

8. The method according to claim 7 wherein said mixture is tall oil fatty acid.

9. The method according to any one of claims 2 to 8 wherein the surface active macromolecule is added to said wet, particulate polymer mass to a concentration of from about 10 to about 300 ppm.

10. The method according to claim 1 wherein the surface active macromolecule is a surface active polymer.

11. The method according to claim 10 wherein the surface active polymer is a homopolymer of diallyl dimethyl ammonium chloride.

12. The method according to claim 11 wherein the surface active polymer is a homopolymer of diallyl dimethyl ammonium chloride having a molecular weight of about 150,000.

13. The method according to any one of claims 10 to 12 wherein the surface active polymer is added to the wet, particulate polymer mass to a concentration of from 7.5 to 75 ppm.

14. The method according to claim 1 wherein the surface active macromolecule is the reaction product of an 11-15 carbon chain length alcohol reacted with 1.5 moles of epichlorohydrin and then quaternized with trimethylamine.

15. The method according to claim 14 wherein the reaction product is the mixture 3-alkoxy($C_{11}$-$C_{15}$)-2-hydroxy-n-propyl trimethylammonium chloride.

16. The method according to claim 15 wherein said 3-alkoxy($C_1$-$C_{15}$)-2-hydroxy-n-propyl trimethylammonium chloride is added to said wet, particulate polymer mass to a concentration of from 12 to 100 ppm.

17. The method according to any one of the preceding claims wherein the wet, particulate polymer mass comprises a high molecular weight polymer of vinyl chloride.

18. The method according to claim 17 wherein said polyvinyl chloride is prepared by suspension polymerization.

19. The method according to any one of claims 1 to 16 wherein the wet, particulate polymer mass comprises a high molecular weight copolymer of butadiene with acrylonitrile and/or styrene.

20. The method according to claim 19 wherein the high molecular weight copolymer is prepared by emulsion polymerization.

21. The method according to any one of the preceding claims wherein said mechanical dewatering procedure is filtration, centrifugation, coagulation or thermal drying.

22. The method according to any one of the preceding claims wherein at least two of the said surface-active macromolecules are present.

23. The use of a surface-active macromolecule as an additive in dewatering of a wet, particulate polymer mass.

24. The use of fatty acid diesters of polyethylene glycol wherein the fatty acids have from 16 to 20 carbon atoms as an additive in dewatering of a wet, particulate polymer mass.

25. The use of a homopolymer of diallyl dimethyl ammonium chloride as an additive in dewatering of a wet, particulate polymer mass.

26. The use of a reaction product of an 11-15 carbon chain length alcohol reacted with 1.5 moles per mole of epichlorohydrin and then quaternized with trimethylamine as an additive in dewatering of a wet, particulate polymer mass.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 5) |
|---|---|---|---|
| X | DE-A-2 025 729 (VYSKUMNY USTAV PRE) * Claims 1-3; page 4, paragraph 2 - page 7, paragraph 2; example * | 1,10,17 ,18 | C 08 F 6/00 C 08 C 3/00 |
| A | US-A-2 637 119 (L.M. GERMAIN) * Whole document * | 1 | |
| A | DE-A-2 557 325 (BASF) * Whole document * | 1 | |

| | |
|---|---|
| | TECHNICAL FIELDS SEARCHED (Int. Cl.5) |
| | C 08 F C 08 C |

The present search report has been drawn up for all claims

| Place of search | Date of completion of the search | Examiner |
|---|---|---|
| THE HAGUE | 21-08-1990 | DE ROECK R.G. |